# EUROPÄISCHE PATENTSCHRIFT

(11) **EP 3 847 592 B1**
(45) Veröffentlichungstag und Bekanntmachung des Hinweises auf die Patenterteilung: **03.01.2024**
(21) Anmeldenummer: 19762355.6
(22) Anmeldetag: 30.08.2019
(51) Int. Cl.: G06N 20/00, G01D 5/244, H04L 9/40, B60W 40/02, B60W 40/10, G06F 21/55, G06N 3/02, G06N 3/08, H04L 67/12

(54) **ANORDNUNG UND VERFAHREN ZUR STEUERUNG EINER VORRICHTUNG**
ARRANGEMENT AND METHOD FOR CONTROLLING A DEVICE
ENSEMBLE ET PROCÉDÉ POUR LA COMMANDE D'UN DISPOSITIF

(30) Priorität: 03.09.2018 DE 102018214921
(43) Veröffentlichungstag der Anmeldung: 14.07.2021
(73) Patentinhaber: Deutsches Zentrum für Luft- und Raumfahrt e.V., 51147 Köln (DE)
(72) Erfinder: BÖRNER, Anko, 12489 Berlin (DE)
(74) Vertreter: Zucker, Volker
(86) Internationale Anmeldenummer: PCT/EP2019/073182
(87) Internationale Veröffentlichungsnummer: WO 2020/048879

(56) Entgegenhaltungen:
- WO-A1-2018/008605
- DE-A1-102007 027 649
- DE-A1-102011 084 784
- DE-A1-102014 220 925
- US-A1- 2004 054 505

## Beschreibung

Die vorliegende Erfindung betrifft eine Anordnung und ein Verfahren zur Steuerung einer Vorrichtung.

Aus der TW 201802705 ist ein System bekannt, welches eine künstliche Intelligenz umfasst und ein erstes künstliches Intelligenz Modul mit Funktionen zum unterstützten oder selbstdisziplinierten Informationsaustausch mit einem offenen Netzwerk und ein zweites künstliches Intelligenz Modul zur Überwachung des ersten künstlichen Intelligenz Moduls aufweist, wobei im Betrieb die Überwachung selbständig in einem geschlossenen Netzwerk neben einem Informationsaustauschprozess stattfindet. Dadurch kann eine Manipulation des ersten künstlichen Intelligenz Moduls durch z. B. einen Hackerangriff durch das zweite künstliche Intelligenz Modul erkannt werden. Eine Absicherung gegen eine Fehlentscheidung des ersten künstlichen Intelligenz Moduls ist damit aber nicht gegeben. Aus der DE 10 2007 027 649 ist eine gattungsgemäße Anordnung bekannt.

Es ist eine Aufgabe der vorliegenden Erfindung eine Anordnung, wie im Anspruch 1 offenbart wird, und ein Verfahren, wie im Anspruch 10 offenbart wird, zur Verfügung zu stellen, die/das diese Nachteile nicht aufweist.

Nach einer grundlegenden Idee der Erfindung wird vorgeschlagen, ein erstes nicht-deterministisches, selbstlernendes System mit einer Überwachungseinrichtung, welche eine Vorgängerversion des ersten nicht-deterministischen, selbstlernenden Systems sein kann, zu überwachen. Ferner werden durch das erste nicht-deterministische, selbstlernende System Daten einer ersten Messeinrichtung verarbeitet, während durch die Überwachungseinrichtung Daten einer ersten und/oder einer zweiten Messeinrichtung verarbeitet werden.

Hierdurch kann ein nicht-deterministisches, selbstlernendes System z. B. auch hinsichtlich Fehlentscheidungen überwacht werden. Angegeben wird insbesondere eine Anordnung nach Anspruch 1 und ein Verfahren nach Anspruch 10. Vorteilhafte Ausführungsformen sind in den Unteransprüchen gegeben.

Insbesondere wird vorgeschlagen: Eine Anordnung zur Steuerung einer Vorrichtung aufweisend,
- eine erste Messeinrichtung,
- ein erstes nicht-deterministisches, selbstlernendes System, wobei das erste nicht-deterministische, selbstlernende System derart ausgebildet ist, Messdaten aus der ersten Messeinrichtung zu verarbeiten und ein erstes Signal zur Steuerung der Vorrichtung auszugeben,
- eine Überwachungseinrichtung, wobei die Überwachungseinrichtung derart ausgebildet ist, Messdaten aus der ersten Messeinrichtung und/oder einer zweiten Messeinrichtung zu verarbeiten und ein zweites Signal, welches eine Information über die Plausibilität des ersten Signals enthält, auszugeben,
- eine Steuerungseinheit, die derart ausgebildet ist, das erste Signal und das zweite Signal zu empfangen und zu verarbeiten,
   wobei
- die Überwachungseinrichtung ein zweites nicht-deterministisches, selbstlernendes System und eine Vorgängerversion des ersten Systems ist.

Eine erste Messeinrichtung ist eine Vorrichtung zur Aufnahme von ersten Messdaten, welche Informationen über die Umgebung der Vorrichtung enthalten. Insbesondere werden als erste Messdaten z. B. Objekte in einer Bewegungsrichtung der Vorrichtung oder in der Nähe der Vorrichtung, oder Bewegungsdaten über ein in einer Bewegungsrichtung der Vorrichtung oder in der Nähe der Vorrichtung befindliche Objekte aktiv und/oder passiv erfasst. Die Erfassung dieser ersten Messdaten kann aktiv z. B. mittels elektromagnetischer Entfernungsmessung, insbesondere Radar oder insbesondere mit elektrooptischer Entfernungsmessung, insbesondere mit LIDAR erfolgen. Ebenso kann die Erfassung von Objekten passiv z. B. durch das Empfangen von durch Hindernisse abgestrahlten oder reflektierten Signalen beispielsweise durch Kameras erfolgen.

Eine zweite Messeinrichtung ist eine Vorrichtung zur Aufnahme von zweiten Messdaten, welche Informationen über die Umgebung der Vorrichtung enthalten. Insbesondere werden als zweite Messdaten z. B. Objekte in einer Bewegungsrichtung der Vorrichtung oder in der Nähe der Vorrichtung, oder Bewegungsdaten über ein in einer Bewegungsrichtung der Vorrichtung oder in der Nähe der Vorrichtung befindliche Objekte aktiv und/oder passiv erfasst. Die Erfassung dieser zweiten Messdaten kann aktiv z. B. mittels elektromagnetischer Entfernungsmessung, insbesondere Radar oder insbesondere mit elektrooptischer Entfernungsmessung, insbesondere mit LIDAR erfolgen. Ebenso kann die Erfassung von Objekten passiv z. B. durch das Empfangen von durch Hindernisse abgestrahlten oder reflektierten Signalen beispielsweise durch Kameras erfolgen.

Ein erstes nicht-deterministisches, selbstlernendes System, kurz erstes System, ist eine künstliche Intelligenz, die insbesondere ein neuronales Netzwerk verwendet und bevorzugterweise mit Hilfe von Daten, also mit maschinellem Lernen, trainiert wurde.

Ein deterministisches System ist ein System, bei dem der Übergang von einem Zustand zu einem nächsten darauffolgenden Zustand bestimmt ist. Beispielsweise ist der Übergang von einem Anfangszustand Z1 zu einem Zwischenzustand Z2 bestimmt. Mit anderen Worten erlauben deterministische Systeme prinzipiell die Ableitung ihres Verhaltens aus einem vorherigen Zustand. Daraus folgt auch, dass bei deterministischen Systemen der Endzustand Z3 aus dem vorherigen Zwischenzustand Z2 (bzw. dem Anfangszustand Z1) bestimmt ist.

Entsprechend ist ein nicht-deterministisches System ein System, bei dem der Übergang von einem Zustand zu einem nächsten darauffolgenden Zustand nicht bestimmt ist. Beispielsweise ist der Übergang von einem Anfangszustand Z1 zu einem Zwischenzustand Z2 nicht bestimmt. Mit anderen Worten erlauben nicht-deterministische Systeme nicht die Ableitung ihres Verhaltens aus einem vorherigen Zustand.

Dabei sei angemerkt, dass ein ausgelerntes neuronales Netzwerk ein deterministisches System darstellt, wohingegen ein System solange nicht- deterministisch ist, solange der Lernvorgang anhält.

Determiniertheit soll im Folgenden den Grad der Vorbestimmtheit eines Systems bezeichnen. Bei determinierten Systemen ist der Übergang von einem Anfangszustand Z1 zu einem Endzustand Z3 bestimmt. Der Übergang vom Anfangszustand Z1 zu einem Zwischenzustand Z2 oder von einem Zwischenzustand Z2 zu einem Endzustand Z3 ist hingegen nicht bestimmt.

Bei der Verarbeitung der ersten Messdaten durch das erste nicht-deterministische, selbstlernende System wird analysiert, ob z. B. eine Änderung des Bewegungszustandes notwendig ist. Eine notwendige Änderung des Bewegungszustandes liegt beispielsweise vor, wenn sich ein Objekt innerhalb der Bewegungsrichtung und/oder des Bewegungsradius der Vorrichtung befindet. Dies bedeutet, dass das erste Signal eine Information zur Vermeidung eines Kontakts zwischen Vorrichtung und Objekt enthält. Beispielsweise kann vorgesehen sein, dass das erste Signal eine Beschleunigung der Vorrichtung in Form einer Änderung der Bewegungsrichtung und/oder in Form einer Verringerung der Bewegungsgeschwindigkeit signalisiert.

In einer Ausführungsform umfassen die ersten Messdaten des Objekts Richtungsinformation. Das erste Signal enthält dann Anweisungen zur Bewegungsrichtung der Vorrichtung. Beispielsweise kann die Vorrichtung dadurch zu einem vorgegebenen Ziel geleitet werden.

In einer Ausführungsform umfassen die Messdaten Geschwindigkeitsinformationen. Das erste Signal enthält dann Anweisungen zur Bewegungsgeschwindigkeit der Vorrichtung. Beispielsweise kann die Vorrichtung dadurch in mit einer vorgegebenen Geschwindigkeit bewegt werden.

In einer Ausführungsform umfassen die Messdaten Informationen über bevorzugte Bewegungsabläufe. Das erste Signal enthält dann Anweisungen zu bevorzugten Bewegungsabläufen der Vorrichtung. Beispielsweise kann vorgesehen sein, dass das erste zur Steuerung eines bevorzugten Bewegungsablaufs, z. B. eine Richtungsänderung in Kombination mit einer Beschleunigung ausgestaltet ist.

In einer Ausführungsform umfassen die Messdaten Prioritätsinformationen. Prioritätsinformationen geben Auskunft darüber, ob eine Vorrichtung ihren Bewegungsablauf auf den eines Objekts anpassen muss, oder ob ein Objekt seinen Bewegungsablauf auf den einer Vorrichtung anpassen muss. Das erste Signal steuert eine Vorrichtung beispielsweise derart, dass die Vorrichtung aus einem bewegten Zustand in einen Stillstand gebracht wird. Dadurch kann ein Objekt den Bereich um die Vorrichtung passieren. Nach Passieren des Objekts, wird die Vorrichtung aus einem Stillstand wieder in einen bewegten Zustand überführt.

Eine Überwachungseinrichtung ist eine Einrichtung zur Generierung und Ausgabe eines zweiten Signals, welches Informationen über die Plausibilität des ersten Signals enthält.

Die Überwachungseinrichtung kann dieselben Messdaten wie das erste System, also die ersten Messdaten, verarbeiten. Hierbei kann die Überwachungseinrichtung zu einem anderen Ergebnis als das erste System kommen. Beispielsweise kann die Überwachungseinrichtung eine notwendige Änderung des Bewegungszustandes erkennen, wohingegen das erste System keine notwendige Änderung des Bewegungszustandes erkennt. Das erste System gibt dann ein erstes Signal, welches keine Änderung des Bewegungszustandes der Vorrichtung veranlasst, aus. Die Überwachungseinrichtung erkennt dieses erste Signal als nicht plausibel, da die Überwachungseinrichtung eine notwendige Änderung des Bewegungszustandes erkannt hat. Die Überwachungseinrichtung gibt dann ein zweites Signal mit der Information über die fehlende Plausibilität des ersten Signals aus.

Alternativ kann die Überwachungseinrichtung die zweiten Messdaten verarbeiten. Durch die Verarbeitung der zweiten Messdaten wird eine zusätzliche Sicherheit gewährleistet, da das erste System z. B. auf Grund von fehlerhaften ersten Messdaten, auf Grund z. B. einer Fehlfunktion der ersten Messeinrichtung, ein erstes Signal zur Steuerung der Vorrichtung ausgibt, welches fehlerhaft sein kann, durch die Überwachungseinrichtung aber nicht als unplausibel erkannt wird, da die Überwachungseinrichtung auf Grundlage der fehlerhaften ersten Messdaten zur selben Bewertung wie das erste System kommen könnte und deshalb ein zweites Signal ausgeben könnte, welches Plausibilität anzeigt. Durch die Verarbeitung zweiter Messdaten durch die Überwachungseinrichtung kann ein erstes fehlerhaftes Signal auf Grund fehlerhafter erster Messdaten durch das zweite Signal als unplausibel erkannt werden. Die Ausgabe der Plausibilitätsinformation erfolgt wie zuvor beschrieben für den Fall, dass die Überwachungseinrichtung die ersten Messdaten verarbeitet.

Die Überwachungseinrichtung kann sowohl einen Teil der ersten Messdaten, die kompletten ersten Messdaten, als auch die zweiten Messdaten verarbeiten. Durch die Verarbeitung der ersten Messdaten und der zweiten Messdaten wird eine weitere zusätzliche Sicherheit gewährleistet, da fehlerhafte Messdaten der ersten Messeinrichtung oder der zweiten Messeinrichtung zu einem zweiten Signal führen können, welches keine Plausibilität des ersten Signals anzeigt. Für einen fehlerfreien Ablauf in der Vorrichtung würde die Verarbeitung der ersten Messdaten und der zweiten Messdaten durch die Überwachungseinrichtung zu demselben Ergebnis führen, wie die Verarbeitung der ersten Messdaten durch das erste System. Das zweite Signal würde dann anzeigen, dass das erste Signal plausibel ist. Sofern z. B. nur die zweiten Messdaten fehlerhaft sind, kann die Verarbeitung der ersten Messdaten und der zweiten Messdaten durch die Überwachungseinrichtung z. B. zu unterschiedlichen Ergebnissen führen. Dementsprechend würde das zweite Signal keine Plausibilität des ersten Signals anzeigen, da zumindest das Ergebnis aus der Verarbeitung eines Messdatensatzes, z. B. die Verarbeitung aus dem fehlerhaften zweiten Messdatensatz, keine Plausibilität des ersten Signals anzeigt.

Mögliche Ursachen für die Anzeige einer fehlenden Plausibilität des ersten Signals durch das zweite Signal sind insbesondere:
- fehlerhafte Verarbeitung der ersten Messdaten durch das erste System,
- fehlerhafte erste Messdaten, die durch das erste System verarbeitet werden,
- fehlerhafte Verarbeitung der ersten Messdaten durch das zweite System,
- fehlerhafte Verarbeitung der zweiten Messdaten durch das zweite System,
- fehlerhafte erste Messdaten, die durch das zweite System verarbeitet werden,
- fehlerhafte zweite Messdaten, die durch das zweite System verarbeitet werden.

Die Steuerungseinheit ist z. B. ein Prozessor.

Die Überwachungseinrichtung ist ein zweites nicht-deterministisches, selbstlernendes System und eine Vorgängerversion des ersten Systems, kurz zweites System. Ein zweites System ist eine künstliche Intelligenz, die insbesondere ein neuronales Netzwerk verwendet und bevorzugterweise mit Hilfe von Daten, also mit maschinellem Lernen, trainiert wurde.

Mit Vorgängerversion ist gemeint, dass es sich bei dem zweiten System um eine ältere Konfiguration des ersten Systems handelt, wobei das erste System mindestens durch ein Update und/oder Upgrade von dem zweiten System verschieden ist, also zumindest ein Update und/oder Upgrade des ersten Systems im Vergleich zum zweiten System durchgeführt wurde. In anderen Worten ist das zweite System ein Downdate (Downdate bezeichnet das Herstellen einer Softwareversion vor dem Einspielen eines Updates) und/oder Downgrade des ersten Systems.

Anders ausgedrückt bezeichnet eine Vorgängerversion im Sinne eines neuronalen Netzwerks eine Konfiguration, welche das neuronale Netzwerk zu einem früheren Zeitpunkt aufwies. Eine Konfiguration ergibt sich z. B. aus den gewichteten Kanten eines neuronalen Netzwerks. Beispielsweise kann ein neuronales Netzwerk eine Konfiguration K1 zu einem Zeitpunkt t1 und eine Konfiguration K2 zu einem Zeitpunkt t2 aufweisen. Hierbei liegt der Zeitpunkt t1 weiter in der Vergangenheit als der Zeitpunkt t2. Die Konfiguration K1 ist dann eine Vorgängerversion der Konfiguration K2.

In einer weiteren Ausführungsform ist das erste nicht-deterministische, selbstlernende System mit einem offenen Netzwerk verbunden und wird von diesem konfiguriert. Ein offenes Netzwerk ist ein Netzwerk, welches für eine Mehrzahl von Systemen z. B. eine Mehrzahl von ersten Systemen zugänglich ist. Insbesondere erlaubt ein offenes Netzwerk die Einbindung von Systemen unterschiedlicher Hersteller, welche über einheitliche Regeln mit einander kommunizieren.

In einer Ausführungsform senden die Mehrzahl der ersten Systeme Informationen an das offene Netzwerk. Das offene Netzwerk speichert die Informationen z. B. in einer Daten-Cloud. Aus den Daten der Daten-Cloud werden Trainingsdatensätze für neuronale Netzwerke, insbesondere für erste Systeme, generiert und dann durch das offene Netzwerk an die jeweiligen ersten Systeme gesendet. Die ersten Systeme können z. B. durch maschinelles Lernen durch diese Trainingsdatensätze konfiguriert werden.

In einer Ausführungsform kann das offene Netzwerk den Austausch gewünschter Informationen zwischen offenem Netzwerk und einem ersten System unterstützen oder selbständig verwalten. Insbesondere bezieht das offene Netzwerk seine Informationen, welche in der Daten-Cloud gespeichert werden, von externen Quellen, z. B. einem ersten System.

In einer weiteren Ausführungsform ist die Überwachungseinrichtung eine lokale Instanz. Mit lokale Instanz ist gemeint, dass die Überwachungseinrichtung nicht mit einem offenen Netzwerk verbunden ist. Manipulation durch einen Eingriff von außen, z. b. durch einen Hackerangriff, sind dadurch nicht möglich.

In einer Ausführungsform arbeitet die lokale Instanz in einem geschlossenen Netzwerk. Ein lokales Netzwerk erlaubt nur die Einbindung von Datenstationen, z. B. Computern, eines oder weniger bestimmter Teilnehmerkreise.

In einer weiteren Ausführungsform weist die Anordnung eine Ausgabeeinrichtung auf, wobei die Steuerungseinheit derart ausgebildet ist, sofern bei der Verarbeitung des zweiten Signals keine Plausibilität des ersten Signals erkannt wird, die Ausgabeeinrichtung zur Ausgabe einer Warnung zu veranlassen. Die Ausgabeeinrichtung kann hierbei eine Warnung z. B. in Form eines akustischen Signals, eines optischen Signals, und/oder eines haptischen Signals ausgeben.

In einer weiteren Ausführungsform enthält das zweite Signal zusätzlich mindestens eine Information zur Steuerung der Vorrichtung oder eine vollständige Information zur Steuerung der Vorrichtung. Insbesondere kann das zweite Signal identisch mit dem ersten Signal sein.

Das zweite Signal kann z. B. eine Beschleunigung der Vorrichtung in Form einer Änderung der Bewegungsrichtung und/oder in Form einer Verringerung der Bewegungsgeschwindigkeit signalisieren, Anweisungen zur Bewegungsrichtung der Vorrichtung enthalten, Anweisungen zur Bewegungsgeschwindigkeit der Vorrichtung enthalten, zur Steuerung eines bevorzugten Bewegungsablaufs ausgestaltet sein und/oder Prioritätsinformationen enthalten.

In einer weiteren Ausführungsform weist die Anordnung eine Konsistenzeinheit auf, die derart ausgebildet ist, das erste Signal und das zweite Signal auf Konsistenz zu prüfen und ein drittes Signal an die Steuerungseinheit zu übertragen. Das dritte Signal ist ein Maß für die Konsistenz des ersten Signals und des zweiten Signals. Die Steuerungseinheit ist derart ausgebildet, das erste Signal zur Steuerung der Vorrichtung zu verwenden, solange ein Grenzwert durch das dritte Signal nicht überschritten ist. Die Konsistenzeinheit ist z. B. ein Prozessor.

In einer Ausführungsform werden das erste Signal und das zweite Signal durch die Konsistenzeinheit an die Steuerungseinheit weitergeleitet.

Das dritte Signal enthält Informationen über die Konsistenz des ersten Signals und des zweiten Signals. Beispielsweise kann das dritte Signal eine Zahl von 0 bis 1 sein.

Der Wert 0 für das dritte Signal bedeutet, dass das erste Signal und das zweite Signal identisch sind.

Der Wert 1 für das dritte Signal bedeutet, dass das erste Signal und das zweite Signal gegenteilige Informationen enthalten. Beispielsweise zeigt das erste Signal eine negative Beschleunigung an, wohingegen das zweite Signal eine positive Beschleunigung anzeigt. Als gegenteilige Information kann auch insbesondere aufgefasst werden, wenn das erste Signal keine Änderung des Bewegungszustands anzeigt und das zweite Signal eine Änderung des Bewegungszustands anzeigt, bzw. andersherum.

Ein Wert zwischen 0 und 1 für das dritte Signal bedeutet, dass das erste Signal und das zweite Signal ähnliche Informationen zur Steuerung der Vorrichtung enthalten. Beispielsweise zeigt das erste Signal eine positive Beschleunigung an und das zweite Signal zeigt ebenfalls eine positive, aber stärkere, Beschleunigung an. Insbesondere ist der Wert für das dritte Signal umso größer, je größer der Unterschied in der angezeigten Beschleunigung des ersten Signals und des zweiten Signals ist.

Je nach Vorgaben kann ein Grenzwert von 0 bis 1 verwendet werden. Ist beispielsweise als Grenzwert g = 0 vorgesehen, bedeutet dies, dass das erste Signal zur Steuerung der Vorrichtung verwendet wird, sofern das erste Signal und das zweite Signal identisch sind.

Ist beispielsweise als Grenzwert 0 < g < 1 vorgesehen, bedeutet dies, dass das erste Signal zur Steuerung der Vorrichtung verwendet wird, sofern der Unterschied zwischen erstem Signal und zweitem Signal den Grenzwert nicht überschreitet. Ein Grenzwert g = 0,5 bedeutet dann beispielsweise, dass der Wert des ersten Signals nicht mehr als doppelt so hoch oder doppelt so klein sein darf wie der Wert des zweiten Signals, damit das erste Signal zur Steuerung verwendet wird. Wird beispielsweise die Beschleunigung gesteuert, so wird das erste Signal zur Steuerung solange verwendet, wie die Beschleunigung eines Signals nicht mehr als doppelt so groß ist, wie die Beschleunigung des anderen Signals.

dass die angezeigte Beschleunigung durch ein Signal doppelt so hoch ist wie die angezeigte Beschleunigung durch das andere Signal. Für g = 0,5 wird das erste Signal dann zur Steuerung verwendet solange der die Beschleunigung eines Signals nicht mehr als doppelt so groß wie die Beschleunigung des anderen Signals.

In einer weiteren Ausführungsform ist die Steuerungseinheit derart ausgebildet, bei Überschreiten des Grenzwertes eine Warnung zu generieren.

In einer vorteilhaften Ausführungsform wird eine generierte Warnung durch eine Einrichtung, insbesondere die oben genannte Ausgabeeinrichtung, ausgegeben. Eine Warnung kann z. B. in Form eines akustischen Signals, eines optischen Signals, und oder eines haptischen Signals ausgeben werden.

In einer weiteren Ausführungsform ist die Steuerungseinheit derart ausgebildet, bei Überschreiten des Grenzwerts das zweite Signal zur Steuerung der Vorrichtung zu verwenden, sofern das erste Signal keine Änderung eines Bewegungszustandes der Vorrichtung und das zweite Signal eine Änderung eines Bewegungszustandes der Vorrichtung anzeigt.

Dies bedeutet, dass für g = 0 immer das zweite Signal zur Steuerung der Vorrichtung verwendet wird, solange das erste Signal und das zweite Signal nicht identisch sind und das erste Signal keine Änderung des Bewegungszustands der Vorrichtung anzeigt.

In einer weiteren Ausführungsform ist die Steuerungseinheit derart ausgebildet, bei Überschreiten des Grenzwerts einen Not-Halt einzuleiten, sofern das erste Signal eine Änderung eines Bewegungszustandes der Vorrichtung anzeigt. Unter Not-Halt ist zu verstehen, dass die Vorrichtung durch eine negative Beschleunigung so schnell wie möglich in einen Stillstand gebracht wird.

Beispielsweise kann diese Anordnung zur Steuerung von wissensbasierten Systemen z. B. in der Bürokommunikation, von Systemen zur Musteranalyse und -erkennung z. B. zur Gesichtserkennung, von Systemen zur Mustervorhersage z. B. für den Vertrieb und/oder von Systemen der Robotik, insbesondere zur autonomen Steuerung von Fahrzeugen, eingesetzt werden.

In einer weiteren Ausführungsform ist das erste System und/oder das zweite System in die Vorrichtung, welche gesteuert werden soll, integriert. Für diesen Fall können Daten zwischen den einzelnen Anordnungsteilen z. B. per LAN-Verbindung übertragen werden.

In einer weiteren Ausführungsform ist das erste System und/oder das zweite System losgelöst von der Vorrichtung. Für diesen Fall können Daten zwischen den einzelnen Anordnungsteilen z. B. per Funk übertragen werden.

Weiterhin wird insbesondere vorgeschlagen: Ein Verfahren zur Steuerung einer Vorrichtung umfassend folgende Verfahrensschritte,
- ermitteln erster Messdaten,
- auswerten der ersten Messdaten durch ein erstes nicht-deterministisches, selbstlernendes System und ausgeben eines ersten Signals, welches Informationen zur Steuerung der Vorrichtung enthält,
- auswerten der ersten Messdaten und/oder von zweiten Messdaten durch eine Überwachungseinrichtung und ausgeben eines zweiten Signals, welches Informationen zur Plausibilität des ersten Signals enthält,
- verarbeiten des ersten Signals des ersten nicht-deterministischen, selbstlernenden Systems und des zweiten Signals der Überwachungseinrichtung in einer Steuerungseinheit,
wobei
- die Überwachungseinrichtung ein zweites nicht-deterministisches, selbstlernendes System, welches eine Vorgängerversion des ersten nicht-deterministischen, selbstlernenden Systems ist.

Hinsichtlich der verfahrensmäßigen Ausgestaltung wird vollinhaltlich auf die vorangegangenen Ausführungen Bezug genommen.

Nachfolgend wird die Erfindung an Hand von Ausführungsbeispielen beschrieben: Es zeigen:
- Fig. 1:: eine schematische Darstellung einer Ausführungsform einer Anordnung,
- Fig. 2:: eine schematische Darstellung einer Ausführungsform einer weiteren Anordnung und
- Fig. 3:: eine schematische Darstellung einer Ausführungsform einer weiteren Anordnung zur Steuerung eines Kraftfahrzeugs.

Nachfolgend sind der Übersichtlichkeit halber nicht zwingend alle Elemente in allen Figuren mit einem Bezugszeichen versehen. Gleiche Bezugszeichen in verschiedenen Figuren bedeuten Gleichheit der bezeichneten Elemente.

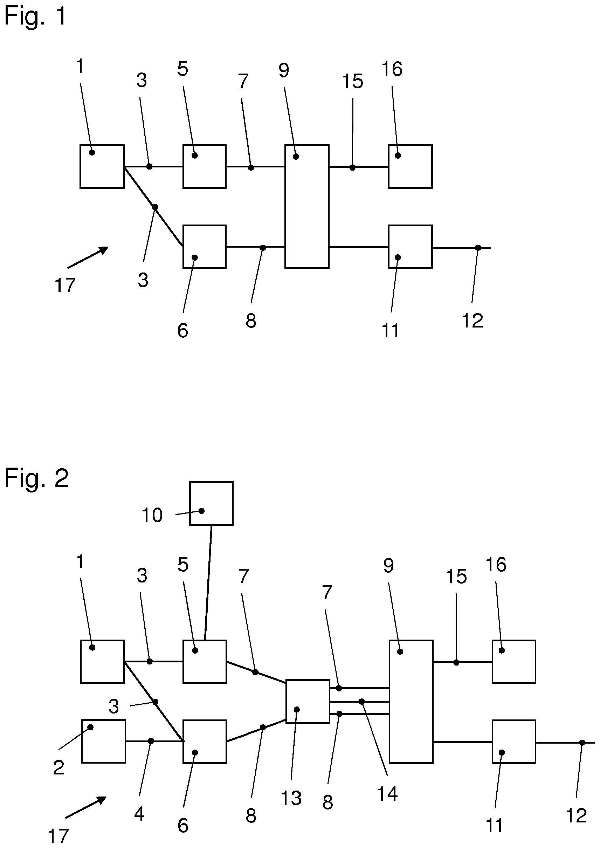

Fig. 1 zeigt eine schematische Darstellung einer Ausführungsform einer erfindungsgemäßen Anordnung 17 zur Steuerung einer Vorrichtung 16, beispielsweise eines Kraftfahrzeugs, mit einer ersten Messeinrichtung 1, ersten Messdaten 3, einem ersten System 5, einem zweiten System 6, einem ersten Signal 7, einem zweiten Signal 8, einer Steuerungseinheit 9, einer Ausgabeeinheit 11, einer Warnung 12 und einem Steuerungssignal 15. Die erste Messeinrichtung 1 leitet erste Messdaten 3 an das erste System 5 und an das zweite System 6 weiter. Das erste System 5 gibt das erste Signal 7 an die Steuerungseinheit 9 aus. Das zweite System 6 gibt das zweite Signal 8 an die Steuerungseinheit 9 aus. Die Steuerungseinheit 9 ist mit der Ausgabeeinheit 11 verbunden, über die eine Warnung 12 ausgegeben werden kann. Die Steuerungseinheit 9 übermittelt ein Steuerungssignal 15 an die Vorrichtung 16. Das erste Signal 7 enthält Informationen zur Steuerung der Vorrichtung 16 und das zweite Signal 8 enthält Informationen über die Plausibilität des ersten Signals 7. Sofern in der Steuerungseinheit 9 keine Plausibilität des ersten Signals 7 durch das zweite Signals 8 erkannt wird, wird die Ausgabeeinrichtung 11 durch die Steuerungseinheit 9 dazu veranlasst eine Warnung 12 auszugeben. Ferner kann insbesondere ein Steuerungssignal 15, welches nicht identisch ist mit dem ersten Signal 7 an die Vorrichtung übermittelt werden. Sofern in der Steuerungseinheit 9 Plausibilität des ersten Signals 7 durch das zweite Signals 8 erkannt wird, wird ein dem ersten Signal 7 identisches Steuerungssignal 15 an die Vorrichtung 16 übermittelt. Das Steuerungssignal 15 enthält insbesondere Anweisungen zur Steuerung der Vorrichtung in drei Raumrichtungen, bzw. bei einem Kraftfahrzeug in zwei Raumrichtungen, und zur Änderung des Bewegungszustands der Vorrichtung 16.

Fig. 2 zeigt eine schematische Darstellung einer Ausführungsform einer erfindungsgemäßen Anordnung 17 zur Steuerung einer Vorrichtung 16 mit einer ersten Messeinrichtung 1, einer zweiten Messeinrichtung 2, ersten Messdaten 3, zweiten Messdaten 4, einem ersten System 5, einem zweiten System 6, einem ersten Signal 7, einem zweiten Signal 8, einer Steuerungseinheit 9, einem offenen Netzwerk 10, einer Ausgabeeinheit 11, einer Warnung 12, einer Konsistenzeinheit 13, einem dritten Signal 14 einem Steuerungssignal 15. Die erste Messeinrichtung 1 leitet erste Messdaten 3 an das erste System 5 und an das zweite System 6 weiter. Die zweiten Messeinrichtung 2 leitet zweite Messdaten 4 an das zweite System 6 weiter. Das erste System 5 ist mit einem offenen Netzwerk 10 verbunden. Das erste System 5 gibt das erste Signal 7 an die Konsistenzeinheit 13 aus und das zweite System 6 gibt das zweite Signal 8 an die Konsistenzeinheit 13 aus. Die Konsistenzeinheit 13 gibt das dritte Signal 14 an die Steuerungseinheit 9 aus. Ebenso leitet die Konsistenzeinheit 13 das erste Signal 7 und das zweite 8 an die Steuerungseinheit 9 weiter. Alternativ können das erste Signal 7 und das zweite Signal 8 direkt von dem ersten System 5 bzw. dem zweiten System 6 an die Steuerungseinheit 9 weitergeleitet werden. Die Steuerungseinheit 9 ist mit der Ausgabeeinrichtung 11 verbunden, welche eine Warnung 12 ausgeben kann. Die Steuerungseinheit 9 übermittelt ein Steuerungssignal 15 an die Vorrichtung 16. Sofern Konsistenz zwischen dem ersten Signal 7 und dem zweiten Signal 8 durch das dritte Signal 14 angezeigt wird, ist das Steuerungssignal 15 insbesondere identisch mit dem ersten Signal 7.

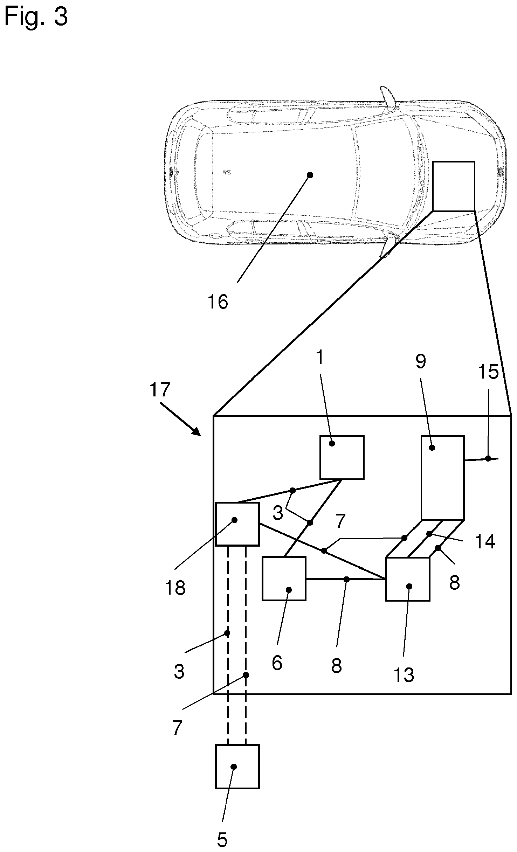

Fig. 3 zeigt eine schematische Darstellung einer Ausführungsform einer erfindungsgemäßen Anordnung 17 zur Steuerung einer Vorrichtung 16, insbesondere eines Kraftfahrzeugs, die mit einer Messeinrichtung 1 und einer Steuerungseinheit 9 ausgestattet ist. Die Messeinrichtung 1 überträgt erste Messdaten 3 an ein erstes System 5 und an ein zweites System 6. Das erste System 5 verarbeitet die ersten Messdaten 3 und gibt ein erstes Signal 7 an eine Konsistenzeinheit 13 weiter. Das zweite System 6 verarbeitet die ersten Messdaten 3 und gibt ein zweites Signal 8 an eine Konsistenzeinheit 13 weiter. Die Konsistenzeinheit 13 prüft das erste Signal 7 und das zweite Signal 8 auf Konsistenz und gibt ein drittes Signal 14, welches Informationen zur Konsistenz des ersten Signal 7 und des zweiten Signals 8 enthält, das erste Signal 7 und das zweite Signal 8 an die Steuerungseinheit 9 weiter. Die Steuerungseinheit 9 steuert das Kraftfahrzeug auf Grundlage des dritten Signals 14 und des ersten Signals 7 oder des zweiten Signals 8. Das erste System 5 besteht aus einem offenen Netzwerk. Das erste System 5 kann insbesondere losgelöst vom dem Kraftfahrzeug sein. Die ersten Messdaten 3 können mittels einer Kommunikationseinrichung 18, insbesondere einer drahtlosen Kommunikationseinrichtung, z. B. per Funk an das erste System 5 gesendet werden. Das erste System 5 kann z. B. per Funk ein erstes Signal 7 an die Kommunikationseinrichtung 18 zurücksenden. Das zweite System 6 ist ein lokales System und kann insbesondere im und/oder am Kraftfahrzeug angebracht sein. Die Konsistenzeinheit 13 ist insbesondere im und/oder am Kraftfahrzeug angebracht. Die Konsistenzeinheit 13 verarbeitet das erste Signal 7 und das zweite Signal 8. Das dritte Signal 14 der Konsistenzeinheit 13 dient unter anderem zur Steuerung des Kraftfahrzeugs und kann z. B. bei erkennen einer Inkonsistenz des ersten Signals 7 mit dem zweiten Signal 8 zu einer Notbremsung des Kraftfahrzeugs führen, welche durch die Steuerungseinheit 9 eingeleitet wird. Das Steuerungssignal 15 enthält insbesondere Informationen zur Steuerung des Kraftfahrzeugs zur Längs- und/oder Quersteuerung.

### Bezugszeichenliste

- 1: Erste Messeinrichtung
- 2: Zweite Messeinrichtung
- 3: Erste Messdaten
- 4: Zweite Messdaten
- 5: Erstes System
- 6: Zweites System
- 7: Erstes Signal
- 8: Zweites Signal
- 9: Steuerungseinheit
- 10: Offenes Netzwerk
- 11: Ausgabeeinrichtung
- 12: Warnung
- 13: Konsistenzeinheit
- 14: Drittes Signal
- 15: Steuerungssignal
- 16: Vorrichtung
- 17: Anordnung
- 18: Kommunikationseinrichung

## Patentansprüche

1. Anordnung (17) zur Steuerung einer Vorrichtung (16) aufweisend,
- eine erste Messeinrichtung (1),
- ein erstes nicht-deterministisches, selbstlernendes System (5), wobei das erste nicht-deterministische, selbstlernende System (5) derart ausgebildet ist, erste Messdaten (3) aus der ersten Messeinrichtung (1) zu verarbeiten und ein erstes Signal (7) zur Steuerung der Vorrichtung (16) auszugeben,
- eine Überwachungseinrichtung, wobei die Überwachungseinrichtung derart ausgebildet ist, die ersten Messdaten (3) aus der ersten Messeinrichtung (1) zu verarbeiten und ein zweites Signal (8), welches eine Information über die Plausibilität des ersten Signals (7) des ersten nicht-deterministischen, selbstlernenden Systems (5) enthält, auszugeben,
- eine Steuerungseinheit, die derart ausgebildet ist, das erste Signal (7) des ersten nicht-deterministischen, selbstlernenden Systems (5) und das zweite Signal (8) der Überwachungseinrichtung zu empfangen und zu verarbeiten,
**dadurch gekennzeichnet, dass**
- die Überwachungseinrichtung ein zweites nicht-deterministisches, selbstlernendes System (6) und eine Vorgängerversion des ersten Systems (5) ist.

2. Anordnung (17) nach Anspruch 1, **dadurch gekennzeichnet, dass**
das erste nicht-deterministische, selbstlernende System (5) mit einem offenen Netzwerk (10) verbunden ist und von diesem konfiguriert wird.

3. Anordnung (17) nach einem der vorangegangenen Ansprüche, **dadurch gekennzeichnet, dass**
die Überwachungseinrichtung eine lokale Instanz ist.

4. Anordnung (17) nach einem der vorangegangenen Ansprüche, **dadurch gekennzeichnet, dass**
die Anordnung (17) eine Ausgabeeinrichtung (11) aufweist,
wobei die Steuerungseinheit (9) derart ausgebildet ist, sofern bei der Verarbeitung des zweiten Signals (8) keine Plausibilität des ersten Signals (7) erkannt wird, die Ausgabeeinrichtung (11) zur Ausgabe einer Warnung (12) zu veranlassen.

5. Anordnung (17) nach einem der vorangegangenen Ansprüche, **dadurch gekennzeichnet, dass**
das zweite Signal (8) zusätzlich mindestens eine Information zur Steuerung der Vorrichtung (16) oder eine vollständige Information zur Steuerung der Vorrichtung (16) enthält.

6. Anordnung (17) nach Anspruch 5, **dadurch gekennzeichnet, dass**
die Anordnung (17) eine Konsistenzeinheit (13) aufweist, die derart ausgebildet ist, das erste Signal (7) und das zweite Signal (8) auf Konsistenz zu prüfen und ein drittes Signal (14) an die Steuerungseinheit (9) zu übertragen, welches ein Maß für die Konsistenz des ersten Signals (7) und des zweiten Signals (8) ist,
wobei die Steuerungseinheit (9) derart ausgebildet ist, solange ein Grenzwert durch das dritte Signal (14) nicht überschritten ist, das erste Signal (7) zur Steuerung der Vorrichtung (16) zu verwenden.

7. Anordnung (17) nach Anspruch 6, **dadurch gekennzeichnet, dass**
die Steuerungseinheit (9) derart ausgebildet ist, bei Überschreiten des Grenzwertes eine Warnung (12) zu generieren.

8. Anordnung (17) nach einem der Ansprüche 6 oder 7, **dadurch gekennzeichnet, dass** die Steuerungseinheit (9) derart ausgebildet ist, bei Überschreiten des Grenzwerts das zweite Signal (8) zur Steuerung der Vorrichtung (16) zu verwenden, sofern das erste Signal (7) keine Änderung eines Bewegungszustandes der Vorrichtung (16) und das zweite Signal (8) eine Änderung eines Bewegungszustandes der Vorrichtung (16) anzeigt.

9. Anordnung (17) nach einem der Ansprüche 6 oder 7, **dadurch gekennzeichnet, dass** die Steuerungseinheit (9) derart ausgebildet ist, bei Überschreiten des Grenzwerts einen Not-Halt einzuleiten, sofern das erste Signal (7) eine Änderung eines Bewegungszustandes der Vorrichtung (16) anzeigt.

10. Verfahren zur Steuerung einer Vorrichtung (16) umfassend folgende Verfahrensschritte,
- ermitteln erster Messdaten (3),
- auswerten der ersten Messdaten (3) durch ein erstes nicht-deterministisches, selbstlernendes System (5) und ausgeben eines ersten Signals (7), welches Informationen zur Steuerung der Vorrichtung (16) enthält,
- auswerten der ersten Messdaten (3) durch eine Überwachungseinrichtung und ausgeben eines zweiten Signals (8), welches Informationen zur Plausibilität des ersten Signals (7) enthält,
- verarbeiten des ersten Signals (7) des ersten nicht-deterministischen, selbstlernenden Systems (5) und des zweiten Signals (8) der Überwachungseinrichtung in einer Steuerungseinheit (9),
**dadurch gekennzeichnet, dass**
- die Überwachungseinrichtung ein zweites nicht-deterministisches, selbstlernendes System (6), welches eine Vorgängerversion des ersten nicht-deterministischen, selbstlernenden Systems ist.

## Claims

1. An arrangement (17) for controlling a device (16), said arrangement comprising:
- a first measuring device (1),
- a first non-deterministic, self-learning system (5), wherein the first non-deterministic, self-learning system (5) is set up to process first measurement data (3) from the first measuring device (1) and to output a first signal (7) for controlling the device (16),
- a monitoring device, wherein the monitoring device is set up to process the first measurement data (3) from the first measuring device (1) and to output a second signal (8) containing information concerning the plausibility of the first signal (7) of the first non-deterministic, self-learning system (5), and
- a control unit which is set up to receive and process the first signal (7) of the first non-deterministic, self-learning system (5) and the second signal (8) of the monitoring device,
**characterised in that**
- the monitoring device is a second non-deterministic, self-learning system (6) and a predecessor version of the first system (5).

2. The arrangement (17) according to claim 1, **characterised in that**
the first non-deterministic, self-learning system (5) is connected to an open network (10) and is configured thereby.

3. The arrangement (17) according to any one of the preceding claims, **characterised in that**
the monitoring device is a local entity.

4. The arrangement (17) according to any one of the preceding claims, **characterised in that**
the arrangement (17) comprises an output device (11),
wherein the control unit (9) is set up to prompt the output device (11) to output a warning (12), provided, during the processing of the second signal (8), no plausibility of the first signal (7) is identified.

5. The arrangement (17) according to any one of the preceding claims, **characterised in that**
the second signal (8) additionally contains at least one item of information for controlling the device (16) or complete information for controlling the device (16).

6. The arrangement (17) according to claim 5, **characterised in that**
the arrangement (17) comprises a consistency unit (13) which is set up to check the first signal (7) and the second signal (8) for consistency and to transmit a third signal (14) to the control unit (9), which third signal is a measure for the consistency of the first signal (7) and the second signal (8),
wherein the control unit (9) is set up to use the first signal (7) to control the device (16), provided a limit value is not exceeded by the third signal (14).

7. The arrangement (17) according to claim 6, **characterised in that**
the control unit (9) is set up to generate a warning (12) if the limit value is exceeded.

8. The arrangement (17) according to any one of claims 6 or 7, **characterised in that**
the control unit (9) is set up, if the limit value is exceeded, to use the second signal (8) to control the device (16), provided the first signal (7) does not indicate a change to the state of motion of the device (16) and the second signal (8) does not indicate a change to the state of motion of the device (16).

9. The arrangement (17) according to any one of claims 6 or 7, **characterised in that**
the control unit (9) is set up, if the limit value is exceeded, to initiate an emergency stop, provided the first signal (7) indicates a change to the state of motion of the device (16).

10. A method for controlling a device (16) comprising the following method steps:
- determining first measurement data (3),
- evaluating the first measurement data (3) by a first non-deterministic, self-learning system (5) and outputting a first signal (7) containing information for controlling the device (16),
- evaluating the first measurement data (3) by a monitoring device and outputting a second signal (8) containing information concerning the plausibility of the first signal (7), and
- processing the first signal (7) of the first non-deterministic, self-learning system (5) and the second signal (8) of the monitoring device in a control unit (9), **characterised in that**
- the monitoring device is a second non-deterministic, self-learning system (6) which is a predecessor version of the first non-deterministic, self-learning system.

## Revendications

1. Ensemble (17) de commande d'un dispositif (16) présentant
- un premier dispositif de mesure (1),
- un premier système (5) d'auto-apprentissage non déterministe, dans lequel le premier système (5) d'auto-apprentissage non déterministe est conçu de manière à exploiter des premières données de mesure (3) provenant du premier dispositif de mesure (1) et émettre un premier signal (7) pour la commande du dispositif (16),
- un dispositif de surveillance, le dispositif de surveillance étant conçu de manière à exploiter les premières données de mesure (3) provenant du premier dispositif de mesure (1) et émettre un deuxième signal (8), lequel contient une information concernant la plausibilité du premier signal (7) du premier système (5) d'auto-apprentissage non déterministe,
- une unité de commande qui est conçue de manière à recevoir et à exploiter le premier signal (7) du premier système (5) d'auto-apprentissage non déterministe et le deuxième signal (8) du dispositif de surveillance,
**caractérisé en ce que**
- le dispositif de surveillance est un deuxième système (6) d'auto-apprentissage non déterministe et une version antérieure du premier système (5).

2. Ensemble (17) selon la revendication 1, **caractérisé en ce que**
le premier système (5) d'auto-apprentissage non déterministe est relié avec un réseau (10) ouvert et est configuré par celui-ci.

3. Ensemble (17) selon l'une des revendications précédentes, **caractérisé en ce que** le dispositif de surveillance est une instance locale.

4. Ensemble (17) selon l'une des revendications précédentes, **caractérisé en ce que** l'ensemble (17) présente un dispositif de sortie (11),
dans lequel l'unité de commande (9) est conçue de telle manière, dans la mesure où lors de l'exploitation du deuxième signal (8) aucune plausibilité du premier signal (7) n'est reconnue, à inciter le dispositif de sortie (11) pour l'émission d'un avertissement (12).

5. Ensemble (17) selon l'une des revendications précédentes, **caractérisé en ce que** le deuxième signal (8) contient de manière complémentaire au moins une information pour la commande du dispositif (16) ou une information complète pour la commande du dispositif (16).

6. Ensemble (17) selon la revendication 5, **caractérisé en ce que**
l'ensemble (17) présente une unité de cohérence (13) qui est conçue de manière à vérifier le premier signal (7) et le deuxième signal (8) en ce qui concerne la cohérence et à transmettre un troisième signal (14) à l'unité de commande (9), lequel est une mesure de la cohérence du premier signal (7) et du deuxième signal (8),
dans lequel l'unité de commande (9) est conçue de manière, tant qu'une valeur limite n'est pas dépassée par le troisième signal (14), à employer le premier signal (7) pour la commande du dispositif (16).

7. Ensemble (17) selon la revendication 6, **caractérisé en ce que**
l'unité de commande (9) est conçue de manière à générer un avertissement (12) lors d'un dépassement de la valeur limite.

8. Ensemble (17) selon l'une des revendications 6 ou 7, **caractérisé en ce que**
l'unité de commande (9) est conçue de manière, lors du dépassement de la valeur limite, à employer le deuxième signal (8) pour la commande du dispositif (16), dans la mesure où le premier signal (7) n'indique aucune modification d'un état de déplacement du dispositif (16) et que le deuxième signal (8) indique une modification d'un état de déplacement du dispositif (16).

9. Ensemble (17) selon l'une des revendications 6 ou 7, **caractérisé en ce que**
l'unité de commande (9) est conçue de manière, lors du dépassement de la valeur limite, à émettre un arrêt d'urgence dans la mesure où le premier signal (7) indique une modification de l'état de déplacement du dispositif (16).

10. Procédé de commande d'un dispositif (16) comprenant les étapes de procédé suivantes
- détermination de premières données de mesure (3),
- exploitation des premières données de mesure (3) par un premier système (5) d'auto-apprentissage non déterministe, et émission d'un premier signal (7), lequel contient des informations pour la commande du dispositif (16),
- exploitation des premières données de mesure (3) par un dispositif de surveillance et émission d'un deuxième signal (8), lequel contient des informations concernant la plausibilité du premier signal (7),
- traitement du premier signal (7) du premier système (5) d'auto-apprentissage non déterministe et du deuxième signal (8) du dispositif de surveillance dans une unité de commande (9),
**caractérisé en ce que**
- le dispositif de surveillance est un deuxième système (6) d'auto-apprentissage non déterministe, lequel est une version antérieure du premier système d'auto-apprentissage non déterministe.
